(19) Europäisches Patentamt
European Patent Office
Office européen des brevets

(11) Publication number: **0 410 443 B1**

(12) # EUROPEAN PATENT SPECIFICATION

(45) Date of publication of patent specification: **11.01.95**

(51) Int. Cl.[6]: **C07F 7/10**, C07F 7/18, C08F 4/42

(21) Application number: **90114350.3**

(22) Date of filing: **26.07.90**

(54) **Organosilane compounds.**

(30) Priority: **26.07.89 US 386183**

(43) Date of publication of application:
**30.01.91 Bulletin 91/05**

(45) Publication of the grant of the patent:
**11.01.95 Bulletin 95/02**

(84) Designated Contracting States:
**AT BE DE DK ES FR GB IT NL SE**

(56) References cited:
**US-A- 4 424 157**
**US-A- 4 473 661**
**US-A- 4 522 930**

(73) Proprietor: **Himont Incorporated**
**Three Little Falls Centre**
**2801 Centerville Road**
**P.O. Box 15439**
**Wilmington**
**Delaware 19850-5439 (US)**

(72) Inventor: **Stewart, Constantine A.**
**2703 Skylark Road,**
**New Castle County**
**Wilmington,**
**Delaware 19808 (US)**

(74) Representative: **Zumstein, Fritz, Dr. et al**
**Patentanwälte,**
**Dr. F. Zumstein,**
**Dipl.-Ing. F. Klingseisen,**
**Bräuhausstrasse 4**
**D-80331 München (DE)**

**EP 0 410 443 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a new class of organosilane compounds for use as an electron donor in Ziegler-Natta supported catalyst systems, particularly for such catalyst systems having an anhydrous activated $MgCl_2$ as the support, for the polymerization of alpha-olefins.

Electron donor compounds, also known as Lewis bases, have been widely used in catalyst systems (1) as an electron donor in the solid component of the catalyst system comprising a halogen-containing Ti compound supported on an anhydrous activated Mg dihalide compound and (2) as an electron donor with the co-catalyst component comprising an organometallic compound, to increase the activity and stereospecificity of the catalyst for the polymerization of alpha-olefins, in particular propylene and higher alpha-olefins.

Conventional classes of electron donor compounds known in the art include ethers, ketones, amines, alcohols, phenols, phosphines and silanes. Examples of such electron donor compounds and their use as a component of the catalyst system are described in U.S. Patent Nos. 4,107,414, 4,186,107, 4,226,963, 4,347,160, 4,382,019, 4,435,550, 4,465,782, 4,472,524, 4,473,660, 4,522,930, 4,530,912, 4,532,313, 4,560,671, and 4,657,882.

Electron donors consisting of organosilane compounds, containing Si-OCOR, Si-OR, or Si-$NR_2$ bonds, having silicon as the central atom, and R is an alkyl alkenyl, aryl, arylalkyl or cycloalkyl with 1-20 carbon atoms are known in the art. Such compounds are described in U.S. Patent Nos. 4,347,160, 4,382,019, 4,435,550, 4,465,782, 4,473,660, 4,530,912 and 4,560,671 where they are used as an electron donor in the solid catalyst component and U.S. Patent Nos. 4,472,524, 4,522,930, 4,560,671, 4,581,342 and 4,657,882 where they are used as an electron donor with the co-catalyst.

However, in all of the prior art catalyst systems in which an organosilane compound is used, none describe organosilane compounds containing Si-N bonds where the nitrogen bonded to the silicon atom is a nitrogen of a containing heterocyclic ring.

The present invention provides a new class of organosilane electron donor compounds containing a Si-N bond, wherein the nitrogen is a 5-8 membered nitrogen containing heterocyclic ring. These compounds are used as an electron donor with the co-catalyst component of supported Ziegler-Natta catalyst systems for polymerization of alpha-olefins. Using the new compounds of the present invention in such catalyst systems result in catalysts of increased activity and stereospecificity.

The new class of organosilane compounds have the following structure:

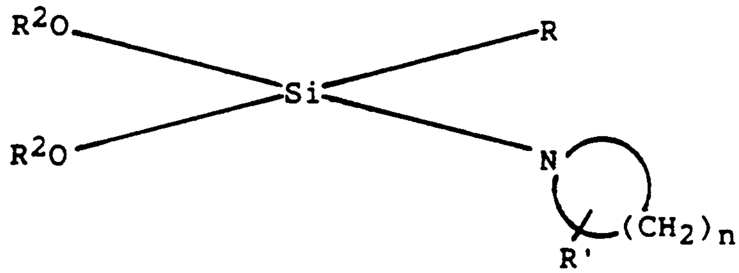

where R is a $C_{1-4}$ linear or branched alkyl, 4-methylpiperidyl, aryl or cycloalkyl; $R^1$ is hydrogen, methyl or ethyl; $R^2$ is methyl or ethyl and; n is 4 to 7.

Typical organosilane compounds are: t-butyl(4-methylpiperidyl)dimethoxysilane, t-butyl(3-methyl-piperidyl)dimethoxysilane, t-butyl(2-methylpiperidyl)dimethoxysilane, bis(4-methylpiperidyl)dimethoxysilane, cyclohexyl-(4-methylpiperidyl)dimethoxysilane, 2-bicycloheptyl-(4-methylpiperidyl)dimethoxysilane, Phenyl-(4-methylpiperidyl)dimethoxysilane, 4-methylpiperidyl-(isopropyl)dimethoxysilane, n-butyl(4-methylpiperidyl)-dimethoxysilane and isobutyl(4-methylpiperdyl)dimethoxysilane.

It has been found that the new organosilane compounds of the present invention when used as an electron donor with the co-catalyst or activator in supported catalyst systems provide further control over the polymerization of alpha-olefins. It is known in the art that the use of electron donors with the co-catalyst provide an increase in the activity of supported catalysts and control of stereospecificity and molecular weight. When so used, the organosilane compounds of the present invention containing a Si-N bond, wherein the nitrogen is a 5-8 membered nitrogen containing heterocyclic ring and the non-alkoxy substituent, R, is of sufficient size to provide steric hindrance, have a significant effect on the aforementioned activities of the catalyst and properties of the polymer produced therefrom over the conventional organosilane compounds containing Si-OR or Si-OCOR or Si-$NR_2$ bonds, where R is alkyl, aryl, alkenyl or arylalkyl, when used in a like manner.

The success of the new organosilane compounds of the present invention as electron donors appears to be attributed to various factors such as the size of the R group attached directly to the central silicon atom wherein the more sterically demanding the R group is, the greater the increase in activity and stereospecificity of the catalyst. In other words, as the R group increases in size there is an increase in mileage (grams of polypropylene/grams of catalyst) and stereospecificity. There is a limit to the size of the R group attached to the silicon atom in which benefits of increased activity and stereospecifity are realized. Excessive steric bulk results in a reduced activity and a decrease in stereospecificity, which is manifested by an increase in xylene solubles.

The presence of the nitrogen containing heterocyclic ring bonded directly to the silicon atom through the nitrogen is also a factor. It appears that the Si-N bond contributes to the decrease in xylene soluble polymer and in some cases an increase in intrinsic viscosity (IV). In addition to the above factors, it appears that the presence of two above groups directly attached to the silicon atom also contributes to an increase in stereospecificity and mileage as compared to organosilane donor compounds containing only one alkoxy group.

It is believed that the combination of the above factors contribute to the high IV polymers while still retaining high stereospecificity and mileage when the organosilane compounds of the present invention are used with the co-catalyst component.

As a general rule the concentration of the organosilane effects the activity and stereospecificity of the catalyst and the intrinsic viscosity of the polymer. It is known in the art that concentration effects of the donor vary from donor to donor. Surprisingly, the organosilane of the present invention as electron donors with the aluminum-alkyl co-catalyst can be used in lower concentrations than the conventional electron donors with the aluminum-alkyl co-catalyst and still give very good stereoregulating control and increase in activity.

The organosilane compounds of the present invention are used as a component in the Ziegler-Natta type catalyst system comprising the reaction product of (A) an Al-alkyl compound, (B) an organosilane compound of the present invention and (C) a solid catalyst component comprising a Ti compound having at least a Ti-halogen bond and an electron donor compound supported on an anhydrous Mg-dihalide in active form.

Components (A), (B) and (C) are made to react with each other in any order; preferably, however, components (A) and (B) are premixed before being contacted with component (C).

The premixing of (A) and (B) typically is conducted at temperatures of about 25 °C to 70 °C.

The amount of the organosilane compound is preferably such that at least 10% of the Al-alkyl compound is in the form of a complex with the organosilane compound of the present invention.

The Al-alkyl compounds forming component (A) include Al-trialkyls, such as Al triethyl, Al triisobutyl, Al triisopropyl, and compounds containing two or more Al atoms linked to each other through oxygen, nitrogen and sulfur hetero-atoms, such as:

$(C_2H_5)_2Al\text{-}O\text{-}Al(C_2H_5)_2$;

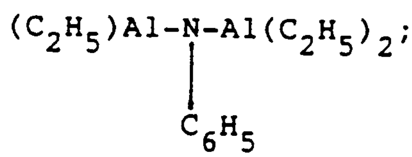

and

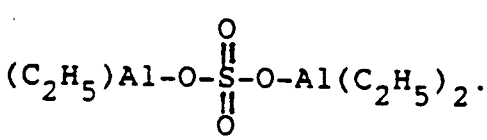

In the solid catalyst forming component (C), suitable examples of the Ti compound having at least a Ti-halogen bond employed in component (C) are Ti tetrahalides, in particular, $TiCl_4$. However, halogen-alcoholates can also be used.

The electron donor compounds for preparing component (C) include alkyl, aryl and cycloalkyl esters of aromatic acids, in particular the alkyl esters of benzoic acid, phthalic acid and their derivatives. Specific

examples include ethyl benzoate, n-butyl benzoate, methyl p-toluate, methyl-p-methoxybenzoate, diisobutyl phthalene and di-n-butyl phthalate. In addition to the above esters, alkyl or alkyl-aryl ethers, ketones, mono- or polyamines, aldehydes and P-compounds, such as phosphines and phosphoramides can also be used as the electron donor.

The active anhydrous Mg dihalides forming the support of component (C) are the Mg dihalides showing in the X-rays powder spectrum of component (C) a broadening of at least 30% of the most intense diffraction line which appears in the powder spectrum of the corresponding dihalide having 1 $m^2/g$ of surface area or are the Mg dihalides showing an X-rays powder spectrum in which said most intense diffraction line is replaced by a halo with the intensity peak shifted with respect to the interplanar distance of the most intense line and/or are the Mg dihalides having a surface area greater than 3 $m^2/g$. The active forms can be prepared in situ from Mg compounds, such as $Mg(OEt)_2$, which are precursors of or can be easily converted into $Mg(X)_2$.

The measurement of the surface area of the Mg dihalides is made on component (C) after treatment with boiling $TiCl_4$ for 2 hours. The found value is considered as surface area of the Mg dihalide.

Very active forms of Mg dihalides are those showing an X-rays powder spectrum in which the most intense diffraction line appearing in the spectrum of the corresponding halide having 1 $m^2/g$ of surface area is decreased in relative intensity and broadened to form a halo or are those in which said most intense line is replaced by a halo having its intensity peak shifted with respect to the interplanar distance of the most intense line. Generally, the surface area of the above forms is higher than 30-40 $m^2/g$ and is comprised in particular between 100-300 $m^2/g$.

Active forms are also those deriving from the above forms by heat-treatment of component (C) in inert hydrocarbon solvents and showing in the X-rays spectrum sharp diffraction lines in place of the halos.

The sharp, most intense line of these forms shows, in any case, a broadening of at least 30% with respect to the corresponding line of the Mg dihalide having 1 $m^2/g$ of surface area.

Preferred Mg dihalides are Mg dichloride and Mg dibromide. The content in water of the dihalides is generally less than 1% by weight.

By Ti halides or Ti haloalcoholates and electron donors supported on active Mg dihalide is meant the above compounds which may be chemically or physically fixed on the support, and not extractable from component (C) by treatment of the same with boiling, 1,2-dichloroethane for 2 hours.

Component (C) can be made by various methods. One of these methods consist of co-grinding the Mg dihalide and the electron donor compound until the product, after extraction with Al-triethyl under standard conditions, shows a surface area higher than 20 $m^2/g$, as set forth above for the spectrum of the Mg dihalide, and thereafter reacting the ground product with the Ti compound.

Other methods of preparing the solid catalyst forming component (C) are disclosed in U.S. Patent Nos. 4,220,554, 4,294,721, 4,315,835, and 4,439,540. The methods of which are incorporated herein by reference.

In all of the above methods, component (C) contains a Mg dihalide present in the active form as set forth above.

Other known methods which lead to the formation of Mg dihalide in active form or to Ti-containing Mg dihalide supported components, in which the dihalide is present in active form, are based on the following reactions:

(i) reaction of a Grignard reagent or $MgR_2$ compound (R being a hydrocarbyl radical) or complexes of said $MgR_2$compounds with Al trialkyls, with halogenating agents as $AlX_3$ or $AlR_mX_n$ compounds (X is halogen, R is a hydrocarbyl, $m + n = 3$, $SiCl_4$ or $HSiCl_3$;

(ii) reaction of a Grignard reagent with a silanol or polysiloxane, $H_2O$ or with an alcohol and further reaction with a halogenating agent or with $TiCl_4$;

(iii) reaction of Mg with an alcohol and a halogenhydric acid, or of Mg with a hydrocarbyl halide and an alcohol;

(iv) reaction of MgO with $Cl_2$ or $AlCl_3$;

(v) reaction of $MgX_2.6H_2O$ (X = halogen) with a halogenating agent or $TiCl_4$; or

(vi) reaction of Mg mono or dialcoholates or Mg carboxylates with a halogenating agent.

In component (C), the molar ratio between the Mg dihalide and the halogenated Ti compound supported thereon is comprised between 1 and 500 and the molar ratio between said halogenated Ti compound and the electron donor supported on the Mg dihalide is comprised between 0.1 and 50.

The catalysts of the invention are employed for polymerizing the alpha-olefins under conventional polymerization conditions, that is by carrying out the polymerization in liquid phase, either in the presence or absence of an inert hydrocarbon solvent or in the gas phase or also by combining, for instance, a polymerization step in liquid phase with a step in gaseous phase.

The polymerization is generally carried out at a temperature of from 40 °C to 70 ° and at atmospheric pressure or at a higher pressure. As a molecular weight regulator hydrogen or regulators of a known type are used.

Suitable olefins which can be polymerized by this invention include olefins of the formula $CH_2=CHR$, where R is H or $C_{1-10}$ straight or branched alkyl, such as ethylene propylene, butene-1, pentene-1, 4-methylpentenel and octene-1.

The following examples are shown to illustrate the invention and are not intended to define the scope thereof.

All solvents were freshly distilled and stored over activated molecular sieves under an inert atmosphere. $^1H$ NMR and $^{13}C$ NMR spectra were recorded on a Varian EM-390 and a Nicolent NT-360WB respectively using $CDCl_3$ as a solvent and $Me_4Si$ as a reference. All NMR spectra are reported in ppm.

The alkyl lithium reagents were titrated for total lithium content by using HCl and a phenolphthalein indicator.

Unless otherwise indicated, all reactions were conducted under an inert atmosphere, using a mercury bubbler.

Example 1

This example illustrates an organosilane compound of this invention and a method of preparing the same.

(a) To a reaction vessel fitted with a reflux condenser and purged with argon was added 200 ml of argon purged methanol. The vessel was cooled to 0 °C in an ice bath and 3.5 g (0.504 mol) of lithium ribbon that had been cut into small pieces was added to the methanol over a period of 1.5 hrs. After the addition was completed the vessel was allowed to warm to room temperature (approx. 23 °C), then refluxed for 3 hrs. A cloudy, slightly yellow viscous solution resulted. The solution was filtered through a medium porosity frit, using Celite diatomaceous earth as a filter- aid. The clear, light yellow solution was titrated with HCl and phenolphthalein to give a 2.76 M solution of methoxylithium/methanol.

(b) Under argon, a reaction vessel fitted with a funnel and stirrer was charged with 200 ml diethylether and 7.3 ml 4-methylpiperidine (0.0615 mol) and stirring commenced. Through the funnel 32.4 ml n-butyllithium/hexane solution (1.9 M) was added over 1 hr. and stirring continued for about 2 more hours. A 0.30 M solution of 1-lithio-4-methylpiperidine in diethylether was obtained.

(c) Under argon, a reaction vessel fitted with a stirrer was charged with 100 ml diethylether and 11.7 g. t-butyltrichlorosilane (0.0615 mol) and stirring was commenced. To this vessel was added dropwise 6.34 g 1-lithio-4-methylpiperidine in diethylether solution from (b) above via a cannula over a 30 min. period and stirring was continued for about 16 hours. The vessel was fitted with a condenser and the reaction mixture was refluxed for 1 hr. and cooled to room temperature. The solution was filtered through a medium porosity frit and the LiCl precipitate was washed three times with 20 ml portions of diethylether. The diethylether was removed in vacuo to yield a clear yellow oil. The crude product was distilled under vacuum (60-68 °C, @ 0.7 torr) to give a clear slightly cloudy oil of 6.45 g of t-butyl(4-methylpiperidyl)-dichlorosilane.

(d) Under argon, a reaction vessel was charged with 200 ml THF and 6.45 g t-butyl(4-methylpiperidyl)-dichlorosilane (0.0254 mol) obtained from (c) above. To this solution was added 18.4 ml of a 2.76 M MeOLi/MeOH solution (0.0508 mol MeOLi) from step (a) dropwise via a cannula over a 30 min. period and the mixture was refluxed for 2 hrs. The reaction was allowed to cool to room temperature and the solvents stripped under vacuum to give an oil containing a white precipitate. The oil was extracted in hexane and the hexane removed under vacuum to give a clear, colorless oil. The oil was distilled under vacuum (46-49 °C, @ 0.7 torr) to yield 4 ml of a clear, colorless oil, of t-butyl(4-methylpiperidyl)-dimethoxysilane $^1H$ NMR ($CDCl_3$) 0.9 (d,1H), 1.0 (s,9H), 1.5 (m,3H), 2.6 (m,4H), 3.2 (m,4H), 3.5 (s,6H), $^{13}C^1H$ ($CDCl_3$) 19.1 ($\underline{C}(CH_3)_3$),22.7 ($CH_3$ ring), 26.6 ($C(\underline{C}H_3)_3$), 31.8 (CH), 36.1 ($CH_2$), 45.7 ($CH_2$), 50.7 ($OCH_3$).

Examples 2 to 4

The procedure and ingredients of example 1 were repeated with the following exceptions shown in Table 1.

TABLE 1

| Example | Process Step | Ingredients | Amounts | Intermediate Product | Final Product |
|---|---|---|---|---|---|
| 2 | (b) | 3-Methylpiperidine<br>n-Butyllithium/hexane solution | 7.2 ml (0.0616 mol)<br>24.6 ml (2.5 M) | 1-Litho-3-methylpiperidine in diethylether (6.31 g, 0.0600 mol) | |
| | (c) | t-Butyltrichlorosilane<br>Intermediate product obtained from step (b) | 11.7 g (0.0616 mol)<br>6.31 g (0.0600 mol) | t-Butyl-3-methylpiperidyl-dichlorosilane (11.8g, 0.0464 mol) | |
| | (d) | Intermediate product obtained from step (c)<br>MeOLi/MEOH | 11.8 g (0.0464 mol)<br>34.5 ml (2.69 M) (0.0928 mol MeOLi) | | 9 ml t-Butyl-(3-methylpiperidyl)dimethoxysilane |
| 3 | (b) | 2-Methylpiperidine<br>n-Butyllithium/hexane solution | 6.96 ml (0.0590 mol)<br>23.7 ml (2.5 M) | 1-Litho-2-methylpiperidine in diethylether (6.10 g, 0.058 mol) | |
| | (c) | t-Butyltrichlorosilane<br>Intermediate product obtained from step (b) | 11.3 g (0.0590 mol)<br>6.10 g (0.058 mol) | t-Butyl-2-methylpiperidyl-dichlorosilane (11.6 g, 0.0456 mol) | |
| | (d) | intermediate product obtained from step (c)<br>MeOLi/MeOH | 11.6 g (0.0456 mol)<br>33.8 ml (2.69 M) (0.0910 mol MeOLi) | | 9 ml t-Butyl-(2-methylpiperidyl)dimethoxysilane |
| 4 | (c) | Diethylether<br>2-Bicycloheptyltrichlorosilane<br>1-Lithio-4-methylpiperidine in diethylether | 200 ml<br>13.5 g (0.059 mol)<br>6.2 g (0.059 mol) | 2-Bicycloheptyl-(4-methylpiperidyl)-dichlorosilane (4.4 g, 0.15 mol) | |
| | (d) | Diethylether<br>Intermediate product obtained from step (c) above<br>MeOLi/MeOH | 300 ml<br>4.4g (0.15 mol)<br>68.2 ml (0.030 mol, 0.44 M) | | 1.4 g 2-Bicycloheptyl(4-methylpiperidyl)-dimethoxysilane |

Example 5

(a) Under argon, a reaction vessel fitted with a funnel and stirrer, the vessel was charged with 250 ml of diethylether and 12 ml $SiCl_4$ (0.105 mol) and while stirring was cooled to 0 °C in an ice bath. Then the funnel was charged with 80 ml of ether, 8.9 ml MeOH (0.291 mol, 5% molar excess) and 27.3 ml $NEt_3$ - (0.291 mol, 5% molar excess) which were added over a period of about 2 hrs. at which time the formation of triethylamine hydrochloride occurred. An extra 100 ml, of diethylether was added to facilitate stirring. Stirring of the reaction mixture was continued for about 16 hours at room temperature. The solution was filtered and the amine hydrochloride washed 3 times with 20 ml of diethylether. The ether was removed in vacuo to afford a pale yellow oil. The product was distilled at 101 °C, atmospheric

pressure, to give a clear, colorless liquid of 2.39 g of dimethoxydichlorosilane.

(b) Under argon, a reaction vessel was charged with 100 ml of diethylether and 2.3 g dimethoxydichlorosilane (0.014 mol) in ether. To this solution was added dropwise a solution of 1-litho-4-methylpiperidine in diethylether of example 1 (b) (0.028 mol) in ether. The reaction mixture was refluxed for 6 hrs. then cooled to room temperature. The solid was removed by filtration and the ether stripped off under vacuum. The crude product was distilled under vacuum (84 ° C,@.0.9 torr) to yield 4 ml. of a bis(4-methylpiperidyl)dimethoxysilane clear, colorless oil. $^1$H NMR ($CDCl_3$) 1.0 (d,1H), 1.1 (s,3H), 1.3 (m,2H), 2.5 (m,2H), 3.0 (m,4H), 3.4 (s,3H).

Example 6

Under nitrogen, a reaction vessel was charged with 150 ml diethylether and 33 ml 4-methylpiperidine (0.026 mol) and cooled to 0 ° C in an ice bath while stirring. The vessel was adapted with an addition funnel which was charged with 11 ml n-butyllithium (0.026 mol) and 50 ml hexane. The hexane/n-butyllithium was added dropwise to the reaction mixture and stirred for an additional hour at 0 ° C at which time the ice bath was removed and the contents of the flask were allowed to warm to room temperature. Upon warming to room temperature stirring was continued for an additional hour and 2.68 g 1-lithio-4-methylpiperidine was obtained.

In a separate reaction vessel under nitrogen, 5.0 ml n-butyl(trimethoxy)silane (0.026 mol.) was added along with 50 ml hexane. The vessel was cooled to 0 ° C in an ice bath while stirring. To this cooled n-butyl-(trimethoxy)silane/hexane solution obtained was added via cannula, 2.68 g 1-lithio-4-methylpiperidine suspension from the first vessel. After the addition was completed, the reaction was allowed to warm to room temperature and stirred for about 16 hours, then heated to reflux for about 2 hours. The solvents were then removed in vacuo and the white solid was washed 3 times with 20 ml portions of hexane to remove the product. The hexane was stripped from the product under vacuum to give an oil.

The oil was distilled on a long path column under vacuum (47 ° C, 0.5 mm Hg) to give 4.6 g of n-butyl-(4-methylpiperidyl)dimethoxysilane.Gas chronotograph (GC) shows product to be 98.5% pure. GC-mass spectrometer (MS) indicates the desired product, m/z (mass/charge) = 245 amu (Atomic Mass Unit), 34% abundance.

Example 7

Under nitrogen, a reaction vessel was charged with 200 ml diethylether and 36.7 ml of a 1.5 M solution of isopropylmagnesium chloride (0.055 mol) then cooled to 0 ° C in an ice bath while stirring. In a separate reaction vessel, 11.86 g 4-methylpiperidyl(trimethoxy)silane (0.054 mol) and 50 ml of hexane were mixed together. The 4-methylpiperidyl(trimethoxy)silane in hexane solution was added to the Grignard above via a cannula over a period of about 1.5 hours. The reaction mixture was then refluxed for about 2 hours.

The magnesium salts were filtered out by using a medium porosity frit and Celite. Dichloromethane (2.3 g, 0.027 mol) was added to the solution to react with the remainder of the Grignard. The reaction was allowed to stir, then settle for 2 hours. All of the solvents were removed in vacuo leaving a cloudy oil, which solidified overnight.

Hexane (75 ml) was added to the solid and dioxane (9.2 ml, 0.107 mol), the solution was allowed to stir for 30 mins. and then filtered. The hexane was removed by vacuum pumping. The remaining oil was distilled on an extra long distillation column under reduced pressure to yield 3.5 g of a clear, colorless oil of isopropyl(4-methylpiperidyl)dimethoxysilane collected at 45 ° C (0.05 mm Hg). The GC indicated 96.5% purity. GC-MS shows a parention at 231.

Example 8

A solution of 1-lithio-4-methylpiperidine (0.052 mol) was prepared as in step (b) of example 1. Under nitrogen, a reaction vessel flask was charged with 75 ml of hexane and 10 ml isobutyl(trimethoxy)silane (0.052 mol). While stirring, the vessel was then cooled to 0 ° C and the 1-lithio-4-methylpiperidine was added dropwise via a cannula over a period of about 2.5 hours. The ice-bath was removed from the reaction mixture and the vessel was fitted with a nitrogen purged reflux condenser and refluxed for 2 hours, cooled to room temperature and stirred for about 16 hours.

The methoxylithium was filtered and the solvents were removed in vacuo. The resultant clear, yellow oil was distilled on a long path column under reduced pressure (0.06 mm Hg) at 40 ° C to give 10.1g of a clear, colorless oil of isobutyl(4-methylpiperidyl)dimethoxysilane (79% yield). The GC indicated 93.1% purity.

The sample was redistilled using a long path column under reduced pressure again. After the head temperature reached 40 °C about 2 grams of product was allowed to pass, then the remaining fraction was collected. The GC indicated 97% purity.

Example 9

Under nitrogen, a reaction vessel was charged with 7.61 g t-butyl(pyrrolidine)dichlorosilane (0.0335 mol) and 150 ml of tetrahydrofuran (THF) and cooled to 0 °C. The vessel was adapted with an addition funnel that was charged with 24.5 ml methoxylithium (0.067 mol) and added dropwise to the reaction mixture. After the addition was complete, the solution was refluxed for two hours. THF was removed under vacuum until lithium chloride began to fall out of solution. Hexane (approx. 100 ml) was used to further extract the product from the lithium chloride. The mixture was then filtered under vacuum, and LiCl was washed a second time with approximately 100 ml hexane. The solution was filtered again under vacuum, and the solvent was also removed under vacuum. The product, a clear, pale green oil, was distilled under vacuum (0.01 torr), and 5.78 g of t-butyl(pyrrolidyl)dimethoxysilane was collected 28 °C. GC analysis indicated 99.1% purity, GC-MS, m/z = 217 amu; calculated 217.38 amu.

Example 10

Under a nitrogen, a reaction vessel was charged with 4.6 ml heptamethyleneimine (0.0368 mol) and 50 ml THF. The vessel was adapted with an addition funnel charged with 23.0 ml n-butyllithium (0.0368 mol) and added to the reaction vessel dropwise over a period of one hour.

A separate reaction vessel was charged with 5.3 ml methyltrimethoxysilane (0.0368 mol) and 50 ml of THF. 4,3 g heptamethyleneiminelithium in the THF solution prepared above was added to the methyltrimethoxysilane solution dropwise via a cannula over a one hour period. The resulting mixture was refluxed for two hours and then filtered under vacuum, using diatomaceous earth as a filtering aid. The solvent was removed from the filtrate under vacuum, leaving a clear, yellow-green liquid. An attempt to extract methoxylithium in hexane 0 °C was unsuccessful. The crude product was distilled under vacuum (0.030 torr). A clear, colorless fraction was collected at 33-35 °C, of 4.27 g heptamethyleneimine(methyl)-dimethoxysilane. GC analysis indicated 97.8% purity, GC-MS, m/z = 217 amu; calculated 217.38 amu.

Example 11

Under nitrogen, a reaction vessel was charged with 200 ml hexane and 2.10 ml piperidine (0.0177 mol) and cooled to 0 °C. An addition funnel of the reaction vessel was charged with 11.06 ml n-butyllithium (1.6 M, 0.0177 mol) which was added dropwise to the mixture. After the addition was complete, the solution was stirred at room temperature for about one hour.

A second reaction vessel was charged with 3.15 g t-butyl-trimethoxysilane (0.0177 mole) and 200 ml hexane. The t-butyl-trimethoxysilane formed was added to the first reaction vessel dropwise via a cannula and refluxed for one hour. This solution was filtered under vacuum through a medium porosity frit, using diatomaceous earth as a filtering aid and 5.89 g of t-butyl(piperidyl)dimethoxysilane solids were obtained. The solvent was removed from the filtrate under vacuum (0.01 torr), and the product was purified through distillation. One fraction was collected at 78-79 °C. GC analysis indicated 98.7% purity; GC-MS, m/z = 232 amu; calculated, 231.41 amu.

The polymerization reactor was heated to 70 °C and purged with a slow argon flow for 1 hour. The reactor was then pressured up to 100 psig with argon at 70 °C and then vented. This procedure was repeated 4 more times. The reactor was then pressured up to 100 psig with propylene and then vented. This procedure repeated 4 more times. The reactor was then cooled to 30 °C.

Separately, into an argon purged addition funnel was introduced in the following order: 75 ml of hexane, 4.47 ml of 1.5 M solution of triethylaluminum (TEAL) (0.764 g, 0.0067 mol) in hexane, 3.4 ml of 0.1 M solution of t-butyl(4-methylpiperidyl)dimethoxysilane (0.0835 g, 0.0034 mol) of example 1 and allowed to stand for 5 minutes. Of this mixture, 35 ml was added to a flask. Then 0.0129 g of FT4S solid catalyst component (a $TiCl_4$/electron donor/active $MgCl_2$ catalyst component commercially available from HIMONT Italia S.p.A.) was added to the flask and mixed by swirling for a period of 5 minutes. The catalytic complex so obtained was introduced, under an argon purge, into the above polymerization reactor at room temperature. The remaining hexane/TEAL/silane solution was then drained from the addition funnel to the flask, the flask was swirled and drained into the reactor and the injection valve was closed.

The polymerization reactor was slowly charged with 2.2 L of liquid propylene, while agitating, and 0.25 mole percent of $H_2$. Then the reactor was heated to 70 °C and polymerization was commenced for about 2 hours at constant temperature and pressure. After about 2 hours agitation was stopped and the remaining propylene was slowly vented. The reactor was heated to 80 °C, purged with argon for 10 minutes and then cooled to room temperature and opened. The polymer was removed and dried in a vacuum oven at 80 °C for 1 hour.

The results of this polymerization run and other polymerization runs using the organosilane compound of example 1 carried out according to the procedure above, except for variations in the amounts thereof, are set forth in Table 2.

Unless otherwise specified, the intrinsic viscosity of the polymers, IV, is measured in decalin at 135 °C using concentrations of 40 mg of polymer in 36 ml of solvent. The mileage of the polymers is calculated according to the formula:

$$\text{mileage} = \frac{\text{grams of polypropylene}}{\text{grams of catalyst}}$$

The percent xylene solubles at room temperature, % XSRT, of the polymer is measured by dissolving 2 g of polymer in 200 ml of xylene at 135 °C, then cooling the solution to room temperature, filtering, evaporating and drying the residue.

The % XSRT was calculated according the formula:

$$\%\ \text{XSRT} = \frac{\text{grams of residue x ml of solvent x 100}}{\text{grams of polymer x ml of filtrate}}$$

TABLE 2

| $H_2$% | Mileage g of PP/g of Cat. | IV | % XSRT |
|---|---|---|---|
| 0.00 | 21,000 | 11.80 | 3.67 |
| 0.10 | 33,600 | 4.43 | 1.79 |
| 0.15 | 35,800 | 4.50 | 1.83 |
| 0.25 | 42,800 | 3.96 | 1.93 |
| 0.30 | 54,800 | 3.31 | 1.41 |

Comparative polymerization runs were carried out according to the procedure above, but with diphenyldimethoxysilane (DPMS) and dicyclohexyldimethoxysilane in place of t-butyl(4-methylpiperidyl)-dimethoxysilane used above. The results are given below in Table 3.

TABLE 3

| Electron Donor | $H_2$% | Mileage g of PP/g of Cat. | IV | % XSRT |
|---|---|---|---|---|
| Diphenyldimethoxysilane | 0.00 | 25,000 | 6.28 | 4.73 |
| | 0.15 | 39,400 | 3.38 | 3.39 |
| | 0.30 | 41,100 | 2.55 | 2.43 |
| Dicyclohexyldimethoxysilane | 0.00 | 16,800 | 4.23 | 3.07 |
| | 0.30 | 32,400 | 3.05 | 2.90 |

It can be seen that the organosilane compound of the present invention in Table 2 when used as an electron donor with the co-catalyst component produced polymers having higher IV's and mileages with lower percentages of xylene soluble material as compared with the comparative electron donors of Table 3 used in the same manner.

Set forth below in Table 4 and 5 are results of polymerization runs using other organosilane compounds of the present invention and comparative electron donors. The polymerizations were carried out in the same manner as described above except for variations in the amounts thereof.

TABLE 4

| Organosilane Compound | $H_2$% | Mileage g of PP/g of Cat. | IV | % XSRT |
|---|---|---|---|---|
| Ex. 4 | | | | |
| 2-Bicycloheptyl(4-methylpiperidyl)dimethoxysilane (0.095 g, 0.335 mol) | 0.15<br>0.35<br>0.45 | 29,900<br>35,700<br>37,000 | 4.42<br>3.90<br>3.28 | 3.31<br>3.33<br>2.94 |
| Ex. 7 | | | | |
| Isopropyl (4-methypiperidyl)dimethoxysilane (0.078 g, 0.0335 mol) | 0.00<br>0.30 | 15,600<br>36,100 | 5.97<br>3.59 | 2.03<br>1.29 |
| Ex. 9 | | | | |
| t-Butyl(pyrolidyl)dimethoxysilane (0.073g, 0.335 mol) | 0.00<br>0.30<br>0.50 | 20,700<br>41,400<br>48,400 | 4.10<br>4.18<br>3.54 | 1.52<br>1.05<br>1.51 |
| Ex. 10 | | | | |
| Heptamethyleneimine(methyl)dimethoxysilane (0.073 g, 0.335 mol) | 0.30 | 38,200 | 2.30 | 1.34 |

TABLE 5

| Electron Donor | $H_2$% | Mileage g of PP/g of Cat. | IV | % XSRT |
|---|---|---|---|---|
| Comparative Ex. 1 | | | | |
| 4-Methyl-piperidine | 0.35 | 25,800 | 1.71 | 38.03 |
| Comparative Ex. 2 | | | | |
| Bis(dimethylamino) dimethylsilane | 0.35 | 17,700 | 2.10 | 19.10 |
| Comparative Ex. 3 | | | | |
| Phenyltriethoxysilane | 0.35 | 33,800 | 1.93 | 5.04 |

As demonstrated above, the organosilane compounds produced polymers having higher IV's and mileages along with lower percentages of xylene soluble material.

## Claims

### Claims for the following Contracting States : AT, BE, DE, DK, FR, GB, IT, NL, SE

1. Organosilane compounds of the general formula,

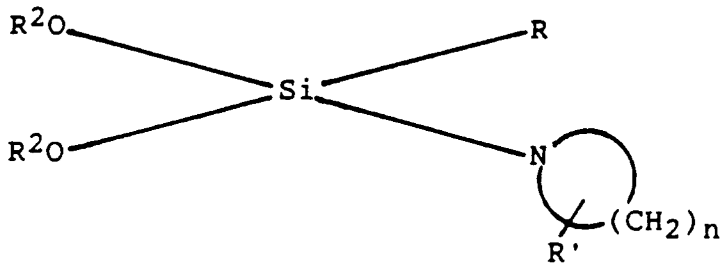

wherein R is a linear or branched $C_{1-4}$ alkyl, 4-methylpiperidyl, aryl or cycloalkyl; R″ is hydrogen, methyl or ethyl; $R^2$ is methyl or ethyl and; and n is 4 to 7.

2. Compounds of claim 1, wherein R is a linear or branched $C_{1-4}$ alkyl and n is 4.

3. Compounds of claim 2 wherein R is t-butyl.

4. Compounds of claim 1, wherein n is 5.

5. Compounds of claim 4, wherein R is a linear or branched $C_{1-4}$ alkyl and R' is hydrogen or methyl.

6. Compounds of claim 5 wherein R is isopropyl and R' is methyl.

7. Compounds of claim 5 wherein R is t-butyl and R' is methyl.

8. compounds of claim 5 wherein R is n-butyl and R' is methyl.

9. Compounds of claim 4 wherein R is 4-methylpiperidyl.

10. Compounds of claim 4 wherein R is 2-bicycloheptyl.

11. Compounds of claim 1 wherein n is 7 and R is a linear or branched $C_{1-4}$ alkyl.

12. Compounds of claim 1 wherein n is 6 and R is a linear or branched $C_{1-4}$ alkyl.

13. Catalysts for the polymerization of alpha-olefins comprising the reaction product of:
   (A) an aluminumalkyl compound;
   (B) an organosilane compound of the formula

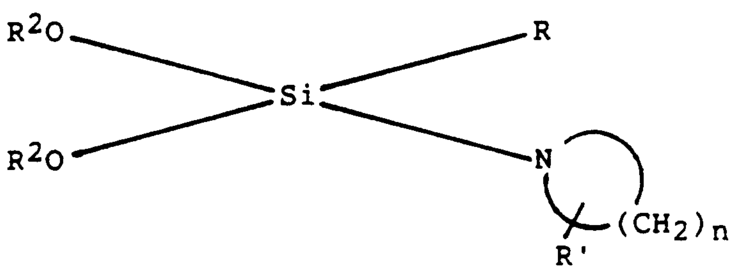

   wherein R is a linear or branched $C_{1-4}$ alkyl, 4-methylpiperidyl, aryl or cycloalkyl; R′ is hydrogen, methyl or ethyl; $R^2$ is methyl or ethyl and; n is 4 to 7; and

(C) a solid component comprising a titanium compound having at least a Ti-halogen bond and an electron donor compound both supported on an activated anhydrous Mg-dihalide.

**14.** The catalysts according to claim 13, in which the organosilane compound is a compound wherein n is 4 and R is t-butyl.

**15.** The catalysts according to claim 13, in which the organosilane compound is a compound wherein n is 5, R is isopropyl and R′ is methyl.

**16.** The catalysts according to claim 13, in which the organosilane compound is a compound wherein n is 5, R is t-butyl and R′ is methyl.

**17.** The catalysts according to claim 13, in which the organosilane compound is a compound wherein n is 5, R is n-butyl and R′ is methyl.

**18.** The catalysts according to claim 13, in which the organosilane compound is a compound wherein n is 5, R is 4-methylpiperidyl and R′ is methyl.

**19.** The catalysts according to claim 13, in which the organosilane compound is a compound wherein n is 5, R is 2-bicycloheptyl and R′ is methyl.

**20.** The catalysts according to claim 13, in which the organosilane compound is a compound wherein n is 7.

**21.** Process for polymerizing alpha-olefins characterized in that the polymerization is carried out in the presence of a catalyst as defined in anyone of claims 13 to 20.

**Claims for the following Contracting State : ES**

**1.** A process for preparing organosilane compounds characterized in that as organosilane compounds, compounds of the general formula

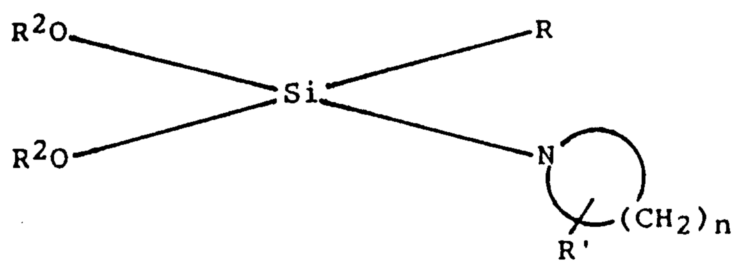

wherein R is a linear or branched $C_{1-4}$ alkyl, 4-methyl-piperidyl, aryl or cycloalkyl; R' is hydrogen, methyl or ethyl; $R^2$ is methyl or ethyl and; and n is 4 to 7; are prepared.

**2.** The process of claim 1, wherein R is a linear or branched $C_{1-4}$ alkyl and n is 4.

**3.** The process of claim 2 wherein R is t-butyl.

**4.** The process of claim 1, wherein n is 5.

**5.** The process of claim 4, wherein R is a linear or branched $C_{1-4}$ alkyl and R' is hydrogen or methyl.

**6.** The process of claim 5 wherein R is isopropyl and R' is methyl.

**7.** The process of claim 5 wherein R is t-butyl and R' is methyl.

**8.** The process of claim 5 wherein R is n-butyl and R' is methyl.

**9.** The process of claim 4 wherein R is 4-methylpiperidyl.

**10.** The process of claim 4 wherein R is 2-bicycloheptyl.

**11.** The process of claim 1 wherein n is 7 and R is a linear or branched $C_{1-4}$ alkyl.

**12.** The process of claim 1 wherein n is 6 and R is a linear or branched $C_{1-4}$ alkyl.

**13.** A process for making catalysts for the polymerization of alpha-olefins comprising reacting the following:
(A) an aluminumalkyl compound;
(B) an organosilane compound of the formula

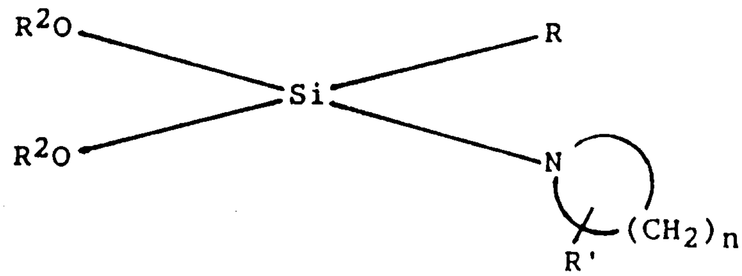

wherein R is a linear or branched $C_{1-4}$ alkyl, 4-methylpiperidyl, aryl or cycloalkyl; R' is hydrogen, methyl or ethyl; $R^2$ is methyl or ethyl and; n is 4 to 7; and
(C) a solid component comprising a titanium compound having at least a Ti-halogen bond and an electron donor compound both supported on an activated anhydrous Mg-dihalide.

**14.** The process according to claim 13, in which the organosilane compound is a compound wherein n is 4 and R is t-butyl.

**15.** The process according to claim 13, in which the organosilane compound is a compound wherein n is 5, R is isopropyl and R' is methyl.

**16.** The process according to claim 13, in which the organosilane compound is a compound wherein n is 5, R is t-butyl and R' is methyl.

**17.** The process according to claim 13, in which the organosilane compound is a compound wherein n is 5, R is n-butyl and R' is methyl.

**18.** The process according to claim 13, in which the organosilane compound is a compound wherein n is 5, R is 4-methylpiperidyl and R' is methyl.

**19.** The process according to claim 13, in which the organosilane compound is a compound wherein n is 5, R is 2-bicycloheptyl and R' is methyl.

**20.** The process according to claim 13, in which the organosilane compound is a compound wherein n is 7.

**21.** Catalysts for the polymerization of alpha-olefins comprising the reaction product of:
(A) an aluminumalkyl compound;

(B) an organosilane compound of the formula

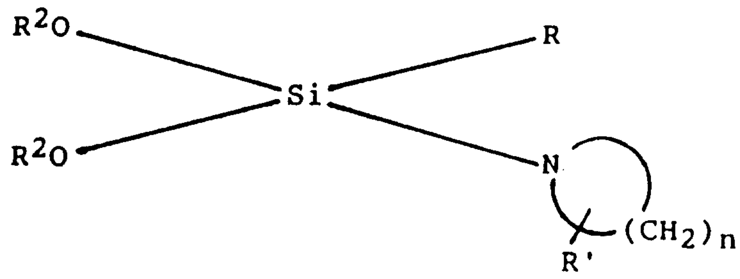

wherein R is a linear or branched $C_{1-4}$ alkyl, 4-methylpiperidyl, aryl or cycloalkyl; R' is hydrogen, methyl or ethyl; $R^2$ is methyl or ethyl and; n is 4 to 7; and
(C) a solid component comprising a titanium compound having at least a Ti-halogen bond and an electron donor compound both supported on an activated anhydrous Mg-dihalide.

**22.** Process for polymerizing alpha-olefins characterized in that the polymerization is carried out in the presence of a catalyst as obtained according to anyone of claims 13 to 20 or as defined in claim 21.

**Patentansprüche**
**Patentansprüche für folgende Vertragsstaaten : AT, BE, DE, DK, FR, GB, IT, NL, SE**

**1.** Organosilanverbindungen der allgemeinen Formel

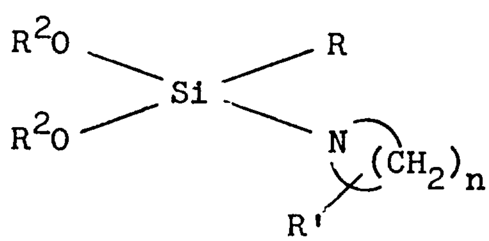

worin R lineares oder verzweigtes $C_{1-4}$-Alkyl, 4-Methylpiperidyl, Aryl oder Cycloalkyl bedeutet; R' für Wasserstoff, Methyl oder Ethyl steht; $R^2$ Methyl oder Ethyl bedeutet und n für 4 bis 7 steht.

**2.** Verbindungen gemäß Anspruch 1, worin R lineares oder verzweigtes $C_{1-4}$-Alkyl ist und n für 4 steht.

**3.** Verbindungen gemäß Anspruch 2, worin R für tert.-Butyl steht.

**4.** Verbindungen gemäß Anspruch 1, worin n für 5 steht.

**5.** Verbindungen gemäß Anspruch 4, worin R lineares oder verzweigtes $C_{1-4}$-Alkyl ist und R' für Wasserstoff oder Methyl steht.

**6.** Verbindungen gemäß Anspruch 5, worin R für Isopropyl steht und R' Methyl bedeutet.

**7.** Verbindungen gemäß Anspruch 5, worin R für tert.-Butyl steht und R' Methyl bedeutet.

**8.** Verbindungen gemäß Anspruch 5, worin R für n-Butyl steht und R' Methyl bedeutet.

**9.** Verbindungen gemäß Anspruch 4, worin R für 4-Methylpiperidyl steht.

**10.** Verbindungen gemäß Anspruch 4, worin R für 2-Bicyoloheptyl steht.

**11.** Verbindungen gemäß Anspruch 1, worin n für 7 steht und R lineares oder verzweigtes $C_{1-4}$-Alkyl bedeutet.

**12.** Verbindungen gemäß Anspruch 1, worin n für 6 steht und R lineares oder verzweigtes $C_{1-4}$-Alkyl bedeutet.

**13.** Katalysatoren zur Polymerisation von α-Olefinen, umfassend das Reaktionsprodukt von
(A) einer Aluminiumalkylverbindung;
(B) einer Organosilanverbindung der Formel

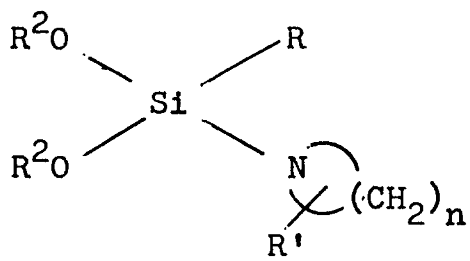

worin R lineares oder verzweigtes $C_{1-4}$-Alkyl, 4-Methylpiperidyl, Aryl oder Cycloalkyl bedeutet; R' für Wasserstoff, Methyl oder Ethyl steht; $R^2$ Methyl oder Ethyl ist und n für 4 bis 7 steht; und
(C) einer festen Komponente, umfassend eine Titanverbindung mit zumindest einer Ti-halogenbindung und eine Elektronen-Donor-Verbindung, beide aufgebracht auf einem aktivierten, wasserfreiem Mg-dihalogenid.

**14.** Katalysatoren gemäß Anspruch 13, worin die Organosilanverbindung eine Verbindung ist, in der n für 4 steht und R tert.-Butyl bedeutet.

**15.** Katalysatoren gemäß Anspruch 13, worin die Organosilanverbindung eine Verbindung ist, in der n für 5 steht, R Isopropyl bedeutet und R' Methyl darstellt.

**16.** Katalysatoren gemäß Anspruch 13, worin die Organosilanverbindung eine Verbindung ist, in der n für 5 steht, R tert.-Butyl bedeutet und R' Methyl darstellt.

**17.** Katalysatoren gemäß Anspruch 13, worin die Organosilanverbindung eine Verbindung ist, in der n für 5 steht, R n-Butyl bedeutet und R' Methyl darstellt.

**18.** Katalysatoren gemaß Anspruch 13, worin die Organosilanverbindung eine Verbindung ist, in der n für 5 steht, R 4-Methylpiperidyl bedeutet und R' Methyl darstellt.

**19.** Katalysatoren gemäß Anspruch 13, worin die Organosilanverbindung eine Verbindung ist, worin n für 5 steht, R 2-Bicycloheptyl bedeutet und R' Methyl darstellt.

**20.** Katalysatoren gemäß Anspruch 13, worin die Organosilanverbindung eine Verbindung ist, in der n für 7 steht.

**21.** Verfahren zur Polymerisation von α-Olefinen, dadurch gekennzeichnet, daß die Polymerisation in Gegenwart eines Katalysators, wie in einem der Ansprüche 13 bis 20 definiert, durchgeführt wird.

**Patentansprüche für folgenden Vertragsstaat : ES**

**1.** Verfahren zur Herstellung von Organosilanverbindungen, dadurch gekennzeichnet, daß als Organosilanverbindungen Verbindungen der allgemeinen Formel

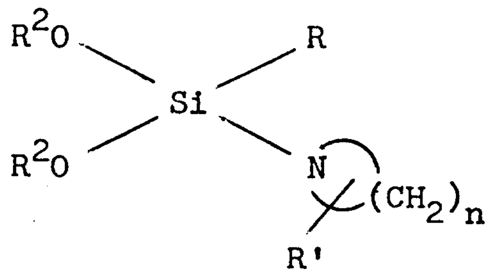

worin R lineares oder verzweigtes $C_{1-4}$-Alkyl, 4-Methylpiperidyl, Aryl oder Cycloalkyl bedeutet; R' für Wasserstoff, Methyl oder Ethyl steht; $R^2$ Methyl oder Ethyl bedeutet und n für 4 bis 7 steht, hergestellt werden.

**2.** Verfahren gemäß Anspruch 1, worin R lineares oder verzweigtes $C_{1-4}$-Alkyl bedeutet und n für 4 steht.

**3.** Verfahren gemäß Anspruch 2, worin R tert.-Butyl ist.

**4.** Verfahren gemäß Anspruch 1, worin n für 5 steht.

**5.** Verfahren gemäß Anspruch 4, worin R lineares oder verzweigtes $C_{1-4}$-Alkyl bedeutet und R' für Wasserstoff oder Methyl steht.

**6.** Verfahren gemäß Anspruch 5, worin R Isopropyl bedeutet und R' für Methyl steht.

**7.** Verfahren gemäß Anspruch 5, worin R tert.-Butyl bedeutet und R' für Methyl steht.

**8.** Verfahren gemäß Anspruch 5, worin R n-Butyl bedeutet und R' für Methyl steht.

**9.** Verfahren gemäß Anspruch 4, worin R 4-Methylpiperidyl bedeutet.

**10.** Verfahren gemäß Anspruch 4, worin R 2-Bicycloheptyl bedeutet.

**11.** Verfahren gemäß Anspruch 1, worin n für 7 steht und R lineares oder verzweigtes $C_{1-4}$-Alkyl bedeutet.

**12.** Verfahren gemäß Anspruch 1, worin n für 6 steht und R lineares oder verzweigtes $C_{1-4}$-Alkyl bedeutet.

**13.** Verfahren zur Herstellung von Katalysatoren zur Polymerisation von $\alpha$-Olefinen, umfassend die Reaktion der folgenden Komponenten:
(A) einer Aluminiumalkylverbindung;
(B) einer Organosilanverbindung der Formel

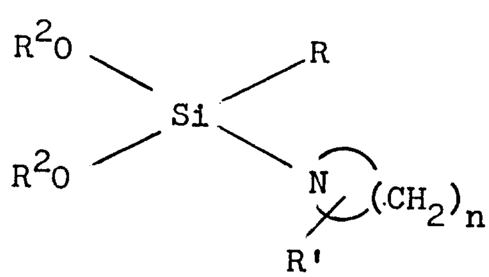

worin R lineares oder verzweigtes $C_{1-4}$-Alkyl, 4-Methylpiperidyl, Aryl oder Cycloalkyl bedeutet; R' für Wasserstoff, Methyl oder Ethyl steht; $R^2$ Methyl oder Ethyl darstellt; n für 4 bis 7 steht; und
(C) einer festen Komponente, umfassend eine Titanverbindung mit zumindest einer Ti-halogenbindung und eine Elektronen-Donor-Verbindung, beide aufgebracht auf einem aktivierten, wasserfreien Mg-dihalogenid.

**14.** Verfahren gemäß Anspruch 13, worin die Organosilanverbindung eine Verbindung ist, in der n für 4 steht und R tert.-Butyl bedeutet.

**15.** Verfahren gemäß Anspruch 13, worin die Organosilanverbindung eine Verbindung ist, in der n für 5 steht, R Isopropyl bedeutet und R' Methyl darstellt.

**16.** Verfahren gemäß Anspruch 13, worin die Organosilanverbindung eine Verbindung ist, in der n für 5 steht, R tert.-Butyl bedeutet und R' Methyl darstellt.

**17.** Verfahren gemäß Anspruch 13, worin die Organosilanverbindung eine Verbindung ist, in der n für 5 steht, R n-Butyl bedeutet und R' Methyl darstellt.

**18.** Verfahren gemäß Anspruch 13, worin die Organosilanverbindung eine Verbindung ist, worin n für 5 steht, R 4-Methylpiperidyl bedeutet und R' Methyl darstellt.

**19.** Verfahren gemäß Anspruch 13, worin die Organosilanverbindung eine Verbindung ist, in der n für 5 steht, R 2-Bicycloheptyl bedeutet und R' Methyl darstellt.

**20.** Verfahren gemäß Anspruch 13, worin die Organosilanverbindung eine Verbindung ist, worin n für 7 steht.

**21.** Katalysatoren zur Polymerisation von α-Olefinen, umfassend das Reaktionsprodukt von
(A) einer Aluminiumalkylverbindung;
(B) einer Organosilanverbindung der Formel

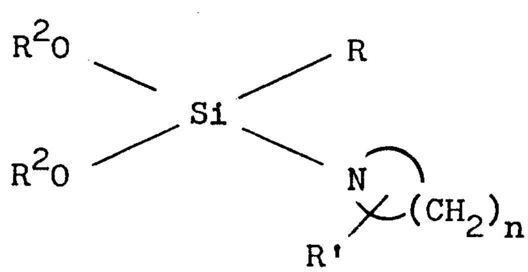

worin R lineares oder verzweigtes $C_{1-4}$-Alkyl, 4-Methylpiperidyl, Aryl oder Cycloalkyl bedeutet; R' Wasserstoff, Methyl oder Ethyl wiedergibt; $R^2$ Methyl oder Ethyl darstellt und n für 4 bis 7 steht; und
(C) einer festen Komponente, umfassend eine Titanverbindung mit zumindest einer Ti-halogenbindung und eine Elektronen-Donor-Verbindung, beide aufgebracht auf einem aktivierten, wasserfreien Mg-dihalogenid.

**22.** Verfahren zur Polymerisation von α-Olefinen, dadurch gekennzeichnet, daß die Polymerisation in Gegenwart eines Katalysators durchgeführt wird, wie er gemäß einem der Ansprüche 13 bis 20 erhalten wird oder wie er in Anspruch 21 definiert ist.

## Revendications

**Revendications pour les Etats contractants suivants : AT, BE, DE, DK, FR, GB, IT, NL, SE**

1. Composé à base d'organosilane de formule générale:

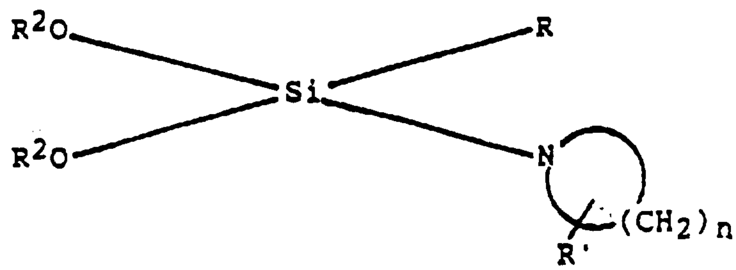

dans laquelle R est un radical alkyle linéaire ou ramifié en $C_{1-4}$, 4-méthyl-piperidyle, aryle ou cycloalkyle;
R' est un atome d'hydrogène, un radical méthyle ou éthyle;
$R^2$ est un radical méthyle ou éthyle et;
n est compris entre 4 et 7, bornes comprises.

2. Composés selon la revendication 1, dans lesquels R est un radical alkyle linéaire ou ramifié en $C_{1-4}$ et n est égal à 4.

3. Composés selon la revendication 2, dans lesquels R est un radical t-butyle.

4. Composés selon la revendiation 1, dans lesquels n est égal à 5.

5. Composés selon la revendication 4, dans lesquels R est un radical alkyle linéaire ou ramifié en $C_{1-4}$ et R' est un atome d'hydrogène ou un radical méthyle.

6. Composés selon la revendication 5, dans lesquels R est un radical isopropyle et R' est un radical méthyle.

7. Composés selon la revendication 5, dans lesquels R est un radical t-butyle et R' est un radical méthyle.

8. Composés selon la revendication 5, dans lesquels R est un radical n-butyle et R' est un radical méthyle.

9. Composés selon la revendication 4, dans lesquels R est un radical 4-méthylpiperidyle.

10. Composés selon la revendication 4, dans lesquels R est un radical 2-bicycloheptyle.

11. Composés selon la revendication 1, dans lesquels n est égal à 7 et R est un radical linéaire ou ramifié en $C_{1-4}$.

12. Composés selon la revendication 1, dans lesquels n est égal à 6 et R est un radical alkyle linéaire ou ramifié en $C_{1-4}$.

13. Catalyseurs pour la polymérisation d'alpha-oléfines comprenant le produit de réaction de:
A) un composé alkyl aluminium,

B) un composé à base d'organosilane de formule générale:

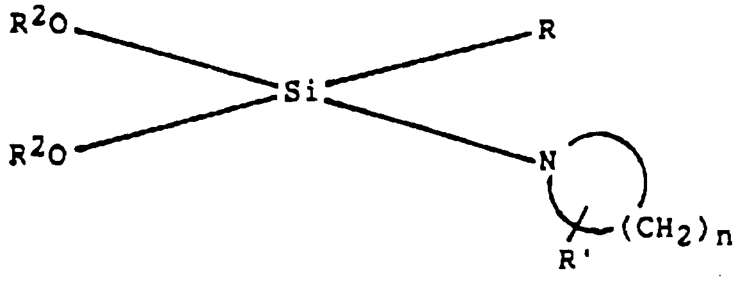

dans laquelle:

R est un radical alkyle linéaire ou ramifié en $C_{1-4}$, 4-méthyl-piperidyle, aryle ou cycloalkyle;
R' est un atome d'hydrogène, un radical méthyle ou éthyle,
$R^2$ est un radical méthyle ou éthyle et,
n est compris entre 4 et 7, bornes comprises,

C) un constituant solide comprenant un composé à base de titane présentant au moins une liaison titane-halogène et comprenant également un composé électro-donneur tous deux étant supportés sur un dihalogénure de magnésium anhydre activé.

**14.** Les catalyseurs selon la revendication 13, dans lesquels le composé à base d'organosilane est un composé dans lequel n est égal à 4 et R est un radical t-butyle.

**15.** Les catalyseurs selon la revendication 13, dans lesquels le composé à base d'organosilane est un composé dans lequel n est égal à 5, et R est le radical isopropyle et R' est le radical méthyle.

**16.** Les catalyseurs selon la revendication 13, dans lesquels le composé à base d'organosilane est un composé dans lequel n est égal à 5, et R est le radical t-butyle et R' est le radical méthyle.

**17.** les catalyseurs selon la revendication 13, dans lesquels le composé à base d'organosilane est un composé dans lequel n est égal à 5, et R est le radical n-butyle et R' est le radical méthyle.

**18.** Les catalyseurs selon la revendication 13, dans lesquels le composé à base d'organosilane est un composé dans lequel n est égal à 5, et R est le radical 4-méthylpiperidyle et R' est le radical méthyle.

**19.** Les catalyseurs selon la revendication 13, dans lesquels le composé à base d'organosilane est un composé dans lequel n est égal à 5, et R est le radical 2-bicycloheptyle et R' est le radical méthyle.

**20.** Les catalyseurs selon la revendication 13, dans lesquels le composé à base d'organosilane est un composé dans lequel n est égal à 7.

**21.** Procédé de polymérisation d'alpha-oléfines caractérisé en ce que la polymérisation est mise en oeuvre en présence d'un catalyseur tel que défini dans l'une quelconque des revendications 13 à 20.

**Revendications pour l'Etat contractant suivant : ES**

**1.** Procédé de préparation de composés à base d'organosilane caractérisé en ce qu'on prépare, en tant que composés à base d'organosilane, des composés de formule générale:

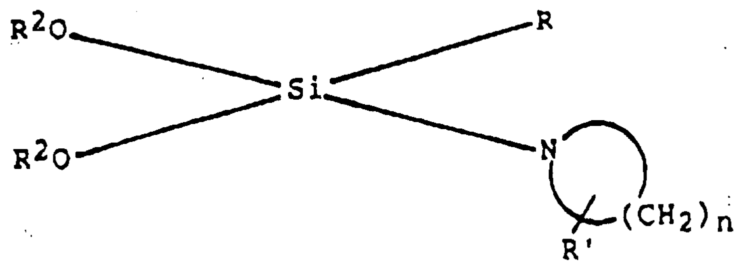

dans laquelle R est un radical alkyle linéaire ou ramifié en $C_{1-4}$, 4-méthyl-piperidyle, aryle ou cycloalkyle;

R' est un atome d'hydrogène, un radical méthyle ou éthyle;

$R^2$ est un radical méthyle ou éthyle et;

n est compris entre 4 et 7, bornes comprises.

**2.** Le procédé selon la revendication 1, dans lequel R est un radical alkyle linéaire ou ramifié en $C_{1-4}$ et n est égal à 4.

**3.** Le procédé selon la revendication 2, dans lequel R est un radical t-butyle.

**4.** Le procédé selon la revendiation 1, dans lequel n est égal à 5.

**5.** Le procédé selon la revendication 4, dans lequel R est un radical alkyle linéaire ou ramifié en $C_{1-4}$ et R' est un atome d'hydrogène ou un radical méthyle.

**6.** Le procédé selon la revendication 5, dans lequel R est un radical isopropyle et R' est un radical méthyle.

**7.** Le procédé selon la revendication 5, dans lequel R est un radical t-butyle et R' est un radical méthyle.

**8.** Le procédé selon la revendication 5, dans lequel R est un radical n-butyle et R' est un radical méthyle.

**9.** Le procédé selon la revendication 4, dans lequel R est un radical 4-méthylpiperidyle.

**10.** Le procédé selon la revendication 4, dans lequel R est un radical 2-bicycloheptyle.

**11.** Le procédé selon la revendication 1, dans lequel n est égal à 7 et R est un radical alkyle linéaire ou ramifié en $C_{1-4}$.

**12.** Le procédé selon la revendication 1, dans lequel n est égal à 6 et R est un radical alkyle linéaire ou ramifié en $C_{1-4}$.

**13.** Un procédé de préparation de catalyseurs pour la polymérisation d'alpha-oléfines comprenant le produit de réaction des composés suivants:

A) un composé alkyl aluminium,

B) un composé à base d'organosilane de formule générale:

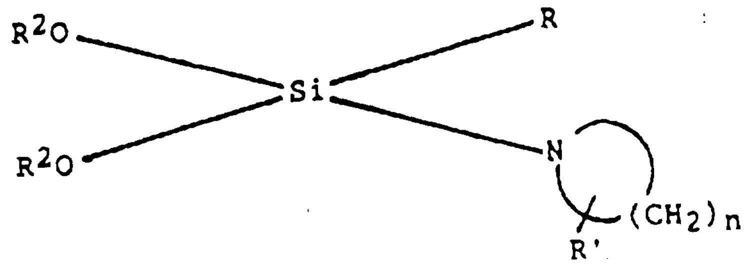

dans laquelle:

R est un radical alkyle linéaire ou ramifié en $C_{1-4}$, 4-méthyl-piperidyle, aryle ou cycloalkyle;
R' est un atome d'hydrogène, un radical méthyle ou éthyle,
$R^2$ est un radical méthyle ou éthyle et,
n est compris entre 4 et 7, bornes comprises,

C) un constituant solide comprenant un composé à base de titane présentant au moins une liaison titane-halogène et comprenant également un composé électro-donneur tous deux étant supportés sur un dihalogénure de magnésium anhydre activé.

**14.** Le procédé selon la revendication 13, dans lequel le composé à base d'organosilane est un composé dans lequel n est égal à 4, R est un radical t-butyle.

**15.** Le procédé selon la revendication 13, dans lequel le composé à base d'organosilane est un composé dans lequel n est égal à 5, R est le radical isopropyle et R' est le radical méthyle.

**16.** Le procédé selon la revendication 13, dans lequel le composé à base d'organosilane est un composé dans lequel n est égal à 5, R est le radical t-butyle et R' est le radical méthyle.

**17.** Le procédé selon la revendication 13, dans lequel le composé à base d'organosilane est un composé dans lequel n est égal à 5, R est le radical n-butyle et R' est le radical méthyle.

**18.** Le procédé selon la revendication 13, dans lequel le composé à base d'organosilane est un composé dans lequel n est égal à 5, R est le radical 4-méthylpiperidyle et R' est le radical méthyle.

**19.** Le procédé selon la revendication 13, dans lequel le composé à base d'organosilane est un composé dans lequel n est égal à 5, R est le radical 2-bicycloheptyle et R' est le radical méthyle.

**20.** Le procédé selon la revendication 13, dans lequel le composé à base d'organosilane est un composé dans lequel n est égal à 7.

**21.** Catalyseurs pour la polymérisation d'alpha-oléfines comprenant le produit de la réaction de:

A) un composé alkyl aluminium
B) un composé à base d'organosilane de formule générale:

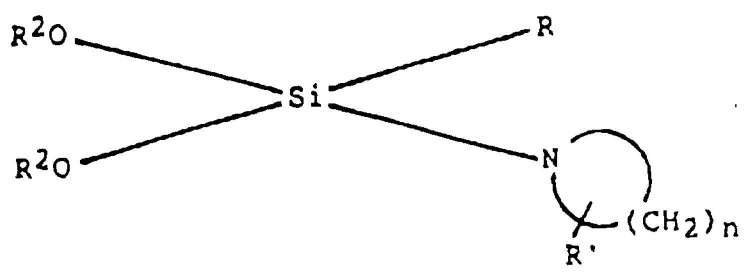

dans laquelle:

R est un radical alkyle linéaire ou ramifié en $C_{1-4}$, 4-méthyl-piperidyle, aryle ou cycloalkyle,

R' est un atome d'hydrogène, un radical méthyle ou éthyle,

$R^2$ est un radical méthyle ou étyle et;

n est compris entre 4 et 7, bornes comprises,

C) un constituant solide comprenant un composé à base de titane présentant au moins une liaison titane-halogène et comprenant également un composé électro-donneur tous deux étant supportés sur un dihalogénure de magnésium anhydre activé.

**22.** Procédé de polymérisation d'alpha-oléfines caractérisé en ce que la polymérisation est effectuée en présence d'un catalyseur tel qu'obtenu selon l'une quelconque des revendications 13 à 20 ou selon la définition donnée dans la revendication 21.